# EUROPÄISCHE PATENTANMELDUNG

(11) **EP 4 742 502 A1**
(43) Veröffentlichungstag der Anmeldung: **13.05.2026**
(21) Anmeldenummer: 25214021.5
(22) Anmeldetag: 06.11.2025
(51) Int. Cl.: H02K 1/16, H02K 3/34, H02K 3/487

(54) **STATOR EINER ELEKTRISCHEN MASCHINE**

(30) Priorität: 07.11.2024 DE 102024210742
(71) Anmelder: Volkswagen Aktiengesellschaft, 38440 Wolfsburg (DE)
(72) Erfinder: Weber, Jan-Niklas, 38440 Wolfsburg (DE); Koch, Johannes, 38440 Wolfsburg (DE); Prokoph, Stefan, 38440 Wolfsburg (DE)

(57) **Zusammenfassung**

Die Erfindung betrifft einen Stator (1) einer elektrischen Maschine mit einem Statorpaket (2) aus einer Vielzahl axial aneinandergereihter Statorlamellen (3), wobei in dem Statorpaket (2) über axial miteinander fluchtende Ausnehmungen (4) in den Statorlamellen (3) in Umfangsrichtung (5) des Stators (1) zueinander beabstandete, das Statorpaket (2) axial wenigstens abschnittsweise durchlaufende Aufnahmen (6) ausgeformt sind und in einer jeweiligen Aufnahme (6) jeweils wenigstens ein Wicklungsdraht (7) einer Statorwicklung (8) des Stators (1) aufgenommen ist. Die Aufnahmen (6) weisen dabei jeweils zumindest einen axial verlaufenden Nutabschnitt (9) mit einer Nutöffnung (10) auf, wobei die Nutöffnung (10), den Nutabschnitt (9) öffnend, das Statorpaket (2) radial nach innen durchbricht. Ferner weisen die Aufnahmen (6) jeweils zumindest einen Halteabschnitt (11) auf, über welchen eine in einer jeweiligen Aufnahme (6) angeordnete Isolationseinlage (12) radial in der Aufnahme (6) fixiert ist.

## Beschreibung

Die Erfindung betrifft einen Stator einer elektrischen Maschine mit einem Statorpaket aus einer Vielzahl axial aneinandergereihter Statorlamellen, wobei in dem Statorpaket über axial miteinander fluchtende Ausnehmungen in den Statorlamellen in Umfangrichtung des Stators zueinander beabstandete, das Statorpaket axial wenigstens abschnittsweise durchlaufende Aufnahmen ausgeformt sind. Dabei ist in einer jeweiligen Aufnahme jeweils wenigstens ein Wicklungsdraht einer Statorwicklung des Stators aufgenommen.

Im Stand der Technik sind verschiedene Ausführungen von Statoren elektrischer Maschinen, insbesondere von Elektromotoren bekannt.

So ist der DE 10 2021 112 931 A1 ein Stator einer elektrischen Maschine zu entnehmen, der aus einem Stator-Blechpaket besteht, das aus Blechzuschnitten gefertigt ist. Diese über die gesamte axiale Länge des Stator-Blechpakets aneinandergereihten Blechzuschnitte weisen Ausnehmungen auf, die in einem sich in Radialrichtung des Stators erstreckenden Querschnitt betrachtet radial innen über einen Steg geschlossen sind. Die Stator-Wicklungen sind in den Ausnehmungen des Stator-Blechpakets untergebracht. Der Steg, der die jeweilige Ausnehmung radial innen verschließt, ist derart plastisch verformt, dass in ihm eine mechanische Spannung eingebracht ist.

Auch die US 2003 / 0 201 687 A1 zeigt einen Stator einer elektrischen Maschine mit einem Stator-Blechpaket und Stator-Wicklungen, die in Ausnehmungen des Stator-Blechpakets aufgenommen sind. Die Ausnehmungen sind ebenso derart ausgebildet, dass diese in den über die gesamte axiale Länge des Stator-Blechpakets aneinandergereihten Blechzuschnitten jeweils in einem sich in Radialrichtung des Stators erstreckenden Querschnitt gesehen radial innen über einen Steg geschlossen sind.

Ein solcher vollständiger Verschluss der Nuten des Stators wirkt sich jedoch negativ auf dessen magnetische Eigenschaften und somit negativ auf die Effizienz einer einen solchen Stator aufweisenden elektrischen Maschine aus.

In einer elektrischen Maschine, insbesondere einem Elektromotor, erfolgt zudem die elektrische Isolierung der elektrischen Leiter, welche, insbesondere in den Nuten des Statorpakets eines Stators gefügt und/oder z. B. als Hairpins ausgeführt sind, gegenüber dem Statorpaket regelmäßig über Nutisolationspapier. Das Nutisolationspapier trennt dabei die Leiter von den metallischen Nuten, um zu verhindern, dass es zu einem Kurzschluss zwischen den Leitern und dem Statorpaket kommt. Neben der elektrischen Isolierung bietet das Nutisolationspapier auch mechanischen Schutz. Es schützt die Leiter vor scharfen Kanten oder ungewolltem Kontakt mit metallischen Oberflächen, die sie beschädigen könnten.

Die Verwendung von Nutisolationspapier in elektrischen Maschinen hat jedoch einige Nachteile, die sowohl die elektrische Isolation als auch die mechanische Stabilität und damit die Zuverlässigkeit des Elektromotors beeinträchtigen können.

Ein Problem ist dabei ein Verrutschen der Leiter in Richtung des Luftspalts oder des Nutschlitzes. Wenn die Leiter, die in den Nuten des Stators liegen, durch mechanische und/oder thermische Belastungen im Betrieb des Elektromotors in Richtung des Luftspalts wandern, wird die vorgesehene Luftstrecke zwischen Rotor und Stator-Wickelkopf unterschritten. Dies kann zu gefährlichen elektrischen Störungen oder gar Kurzschlüssen führen und die Effizienz des Motors beeinträchtigen. In extremen Fällen kann es sogar zu einem mechanischen Kontakt zwischen den Komponenten kommen, was zu ernsthaften Schäden am Elektromotor bis hin zur Zerstörung führt.

Ein weiteres Problem ergibt sich durch das Aufklaffen des Nutisolationspapiers, insbesondere bei Überlappungen dessen zur Innenseite der Nut und/oder zum Luftspalt hin . Beim Fügen der insbesondere als Hairpins ausgeführten Leiter in die Nuten drücken diese radial auf das Nutisolationspapier, was dazu führt, dass das Nutisolationspapier nach innen aufklafft und die Isolationswirkung an diesen Stellen nicht mehr vollständig gewährleistet ist. Das Aufklaffen führt zudem zu weiteren negativen Effekten: Zum einen wird dadurch die Akustik des Elektromotors beeinträchtigt, da Luftverwirbelungen im Luftspalt durch die veränderte Geometrie des Nutisolationspapiers und gegebenenfalls ein Hineinragen dessen in den Luftspalt beeinflusst werden. Dies kann zu unerwünschten Geräuschen während des Motorbetriebs führen. Zum anderen kann das Aufklaffen des Isolationspapiers die Harztränkung bei der Imprägnierung der Leiter stören, was dazu führen kann, dass nicht alle Bereiche der Leiter korrekt mit Isolationsharz getränkt werden. Dies erhöht das Risiko von Ausschuss, da unzureichend imprägnierte Wicklungen mechanisch weniger stabil sind und die elektrische Isolation beeinträchtigt wird.

Stirnseitig besteht die zusätzliche Gefahr, dass Öl in den Luftspalt eindringen kann, da die Nutschlitze größere Öffnungen bieten. Aufgrund einer höheren Reibung zwischen Rotor und Stator beeinträchtigt dies die Leistung des Motors in negativer Weise.

Vor diesem Hintergrund liegt der Erfindung die Aufgabe zugrunde, den Stator der eingangs genannten Art derart auszuführen, dass die elektrische Isolation als auch die mechanische Stabilität des Stators verbessert und dadurch dessen magnetische Eigenschaften nicht oder lediglich äußerst geringfügig beeinträchtigt sind.

Diese Aufgabe wird gelöst mit einem Stator gemäß den Merkmalen des Patentanspruchs 1. Die Unteransprüche betreffen besonders zweckmäßige Weiterbildungen der Erfindung.

Erfindungsgemäß ist also ein Stator einer elektrischen Maschine, insbesondere eines Elektromotors, vorgesehen, wobei der Stator ein Statorpaket aus einer Vielzahl axial aneinandergereihter Statorlamellen, insbesondere Blechlamellen aufweist.

In dem Statorpaket sind dabei, über axial miteinander fluchtende Ausnehmungen in den Statorlamellen, das Statorpaket axial wenigstens abschnittsweise durchlaufende und/oder durchbrechende Aufnahmen ausgeformt. Die Aufnahmen sind hierbei in Umfangrichtung des Stators, insbesondere gleichmäßig zueinander beabstandet. Dabei ist in einejeweiligen Aufnahme jeweils wenigstens ein Wicklungsdraht einer Statorwicklung des Stators aufgenommen.

Darüber hinaus weisen die Aufnahmen erfindungsgemäß jeweils zumindest einen axial verlaufenden Nutabschnitt mit einer Nutöffnung, respektive einem Nutenschlitz und jeweils zumindest einen Halteabschnitt, bevorzugt zumindest zwei Halteabschnitte auf.

Hierbei durchbricht die Nutöffnung, den Nutabschnitt öffnend, das Statorpaket radial nach innen. Insbesondere bedeutet radial nach innen hierbei zum Innenumfang hin und/oder entgegengesetzt des Außenumfangs des Statorpakets. Über den zumindest einen Halteabschnitt ist erfindungsgemäß zudem die in einer jeweiligen Aufnahme angeordnete und z. B. als Nutisolationspapier ausgebildete Isolationseinlage radial in der Aufnahme fixiert. Die Isolationseinlage isoliert dabei die jeweilige Aufnahme gegenüber, insbesondere wenigstens einem Wicklungsdraht der Statorwicklung elektrisch.

Durch die Ausgestaltung einer jeweiligen Aufnahme, hier im Sinne einer Nut über den jeweils zumindest einen Nutabschnitt und Halteabschnitt, bevorzugt zumindest zwei Halteabschnitte, kann die Isolationseinlage vorteilhaft in der Aufnahme fixiert und somit die elektrische Isolation als auch die mechanische Stabilität des Stators verbessert werden. Zudem werden die magnetischen Eigenschaften des Stators nicht oder lediglich äußerst geringfügig beeinflusst, da die Aufnahme über den zumindest einen Nutabschnitt radial nach innen weitgehend geöffnet ausgestaltet ist.

In einer besonders vorteilhaften Weiterbildung der Erfindung ist ein jeweiliger Halteabschnitt der Aufnahmen radial innen, d. h. innenumfangsseitig oder am Innenumfang über einen im Statorpaket ausgeformten und sich in Umfangsrichtung erstreckenden Steg geschlossen ausgeformt. Der Verschluss eines jeweiligen Halteabschnitts über einen Steg, welcher folglich die Isolationseinlage und/oder die Wicklungsdrähte in einer jeweiligen Aufnahme fixiert, bietet eine besonders einfache und zugleich vorteilhafte Ausführung sowohl in der Konstruktion als auch in der Fertigung.

Von Vorteil ist eine Ausführungsform der Erfindung zudem dann, wenn ein jeweiliger Halteabschnitt der Aufnahmen radial innen, d. h. innenumfangsseitig oder am Innenumfang über einen sich in Umfangsrichtung erstreckenden Teilsteg lediglich teilweise geschlossen ausgeformt ist und mit den sich radial erstreckenden Aufnahmeseitenwänden einen rechten Winkel einschließt. Durch das Ausführen eines jeweiligen Halteabschnitts als ein Teilsteg wird es ermöglicht, den Einfluss der Halteabschnitte auf die magnetischen Eigenschaften des Stators weiter zu minimieren. Dennoch kann aufgrund des rechten Winkels zwischen Teilsteg und Aufnahmeseitenwänden ein sicheres Fixieren der Isolationseinlage und/oder der Wicklungsdrähte vorteilhaft gewährleistet werden. Hierbei könnte sich ein Teilsteg abschnittsweise von beiden Aufnahmeseitenwänden erstrecken, wobei ein Fenster im Teilsteg mittig angeordnet sein könnte. Der Teilsteg kann sich alternativ jedoch ebenso auch nur von einer Aufnahmeseitenwand erstrecken.

Als vorteilhaft ist eine Ausgestaltung der Erfindung darüber hinaus anzusehen, wenn eine Nutöffnungsbreite einer Nutöffnung eines Nutabschnitts einer Nutbreite dieses Nutabschnitts entspricht. Da der Nutabschnitt für die Positionierung und/oder Fixierung der Isolationseinlage und/oder der Wicklungsdrähte nicht relevant ist, kann hierdurch ein hoher Freiheitsgrad bei der Auslegung des Stators und/oder einer den Stator aufweisenden elektrischen Maschine gewährleistet werden.

Als mit Vorteil behaftet stellt sich eine Weiterbildung der Erfindung ferner dann dar, wenn, insbesondere ausschließlich an einem jeweiligen axialen und/oder stirnseitigen Ende des Statorpakets ein Halteabschnitt ausgeführt ist. Derart kann auch bei einer Ausgestaltung eines Halteabschnitts mit einem den Halteabschnitt schließenden Steg eine Beeinflussung der magnetischen Eigenschaften des Stators im Wesentlichen minimal gehalten und zugleich dennoch eine Positionsstabilität der Isolationseinlage und/oder der Wicklungsdrähte gewährleistet werden. Ferner wird auch die Montage des Statorpakets vereinfacht, da die Halteabschnitte lediglich an den axialen Enden ausgeführt werden.

Im Allgemeinen, jedoch ebenso in Zusammenhang mit der vorstehenden Weiterbildung, liegt eine vorteilhafte Ausbildung der Erfindung zudem darin, dass abseits der axialen und/oder stirnseitigen Enden des Statorpakets axial entlang des Statorpakets wenigstens ein Halteabschnitt, bevorzugt wenigstens zwei oder mehrere Halteabschnitte ausgebildet sind. Die Anordnung von, gegebenenfalls zusätzlichen, Halteabschnitten entlang der axialen Länge des Statorpakets sorgt für eine verbesserte Fixierung der Isolationseinlage und/oder der Wicklungsdrähte. Dies gewährleistet eine hohe mechanische Stabilität z. B. während eines Betriebs einer den Stator aufweisenden elektrischen Maschine, insbesondere bei hohen Drehzahlen oder mechanischen Belastungen. Dadurch werden Vibrationen und potenzieller Verschleiß minimiert. Die Verteilung mehrerer Halteabschnitte entlang des Stators trägt zudem dazu bei, Schwingungen und Resonanzen zu minimieren. Dies führt zu einem ruhigeren Motorlauf, was die Lebensdauer erhöht und den Geräuschpegel im Betrieb einer, insbesondere den Stator aufweisenden elektrischen Maschine senkt.

In einer weiteren überaus vorteilhaften Ausführungsform der Erfindung ist zudem angedacht, dass ein, insbesondere jeweiliger Halteabschnitt der Aufnahmen des Statorpakets über zumindest eine als Haltelamelle ausgeführte Statorlamelle ausgebildet ist, an deren Ausnehmungen, welche wenigstens abschnittsweise einen Halteabschnitt ausformen, radial innen, d. h. innenumfangsseitig oder am Innenumfang, ein sich in und/oder entlang der Umfangsrichtung erstreckendes Haltmittel ausgeformt ist. Die Ausgestaltung der Halteabschnitte direkt in den Stator- respektive Haltelamellen ermöglicht eine kosteneffiziente und konstruktiv einfache Fertigung. Das Haltemittel kann bereits im Stanz- oder Formprozess integriert und dadurch zusätzliche Bauteile oder Arbeitsschritte eingespart werden.

Von Vorteil ist es ebenso, wenn das Haltemittel in einer Weiterbildung der Erfindung ein Stegelement ist, welches eine Aufnahme einer Haltelamelle vollständig verschließt und zumindest ein axiales Segment eines Stegs eines Halteabschnitts ausbildet. Das Stegelement kann somit lediglich ein Segment des Stegs bilden oder der Steg kann vollständig durch ein, insbesondere einziges Haltemittel ausgestaltet sein.

Ferner kann in einer Ausgestaltung der Erfindung vorgesehen sein, dass das Haltemittel ein Teilstegelement ist, welches eine Aufnahme einer Haltelamelle lediglich teilweise verschließt und zumindest ein axiales Segment eines Teilstegs eines Halteabschnitts ausbildet. Das Teilstegelement kann somit ebenfalls lediglich ein Segment des Teilstegs bilden oder der Teilsteg kann vollständig durch ein, insbesondere einziges Teilstegsegment ausgestaltet sein. Durch die Ausführung der Teilstege über in den Haltelamellen ausgeformte Teilstegsegmente ist es wiederum möglich, die Ausformung der Halteabschnitte in die Fertigung der Stator- hier der Haltelamellen zu integrieren, sodass auf weitere Fertigungsschritte verzichtet werden kann.

Die Erfindung vorteilhaft ausgestaltend ist ein insbesondere jeweiliger Nutabschnitt der Aufnahmen des Statorpakets in einer Weiterbildung über zumindest zwei, bevorzugt mehrere aneinandergereihte, als Nutlamellen ausgeführte Statorlamellen ausgebildet, deren, zumindest anteilig einen Nutabschnitt einer Aufnahme ausformende Ausnehmungen radial innen, d. h. innenumfangsseitig oder am Innenumfang eine Öffnung aufweisen, welche ein axiales Segment einer Nutöffnung eines Nutabschnitts ausbildet. Dadurch, dass ein jeweiliger Nutabschnitt über die Stator- respektive Nutlamellen ausgeführt wird, muss dieser nicht auf die Montage des Statorpakets folgend, insbesondere durch ein subtraktives Fertigungsverfahren wie Fräsen, in das Statorpaket eingebracht werden.

Die Erfindung lässt zahlreiche Ausführungsformen zu. Zur weiteren Verdeutlichung ihres Grundprinzips sind einige davon in der Zeichnung dargestellt und werden nachfolgend beschrieben. Die Zeichnung zeigt in
- Fig. 1: eine erste Ausführungsform des Stators mit Halteabschnitten an den axialen Enden;
- Fig. 2: eine erste Ausführungsform des Stators mit Halteabschnitten an den axialen Enden in stark vereinfachter schematischer Darstellung;
- Fig. 3: eine zweite Ausführungsform des Stators mit Halteabschnitten an den axialen Enden und innerhalb des Stators in stark vereinfachter schematischer Darstellung;
- Fig. 4: eine Ausführungsform einer Haltelamelle;
- Fig. 5: eine Ausführungsform einer Nutlamelle;
- Fig. 6: eine Ausnehmung einer Haltelamelle mit Stegelement;
- Fig. 7: eine Ausnehmung einer Haltelamelle mit Teilstegelement;
- Fig. 8: eine Schnittansicht eines Statorpakets mit mehreren Aufnahmen;
- Fig. 9: eine elektrische Maschine mit einem Stator und einem Rotor.

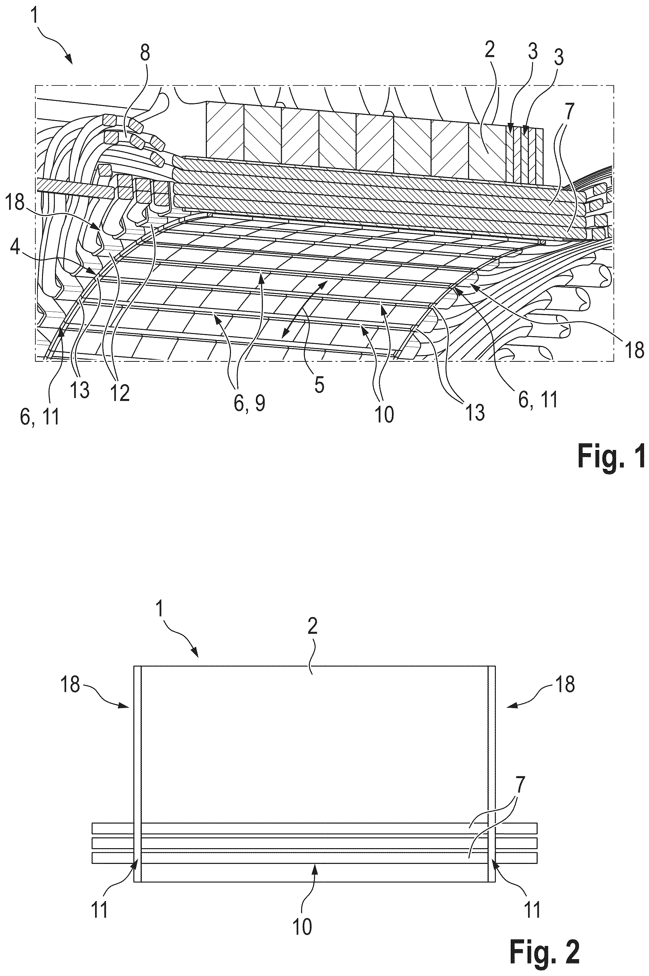

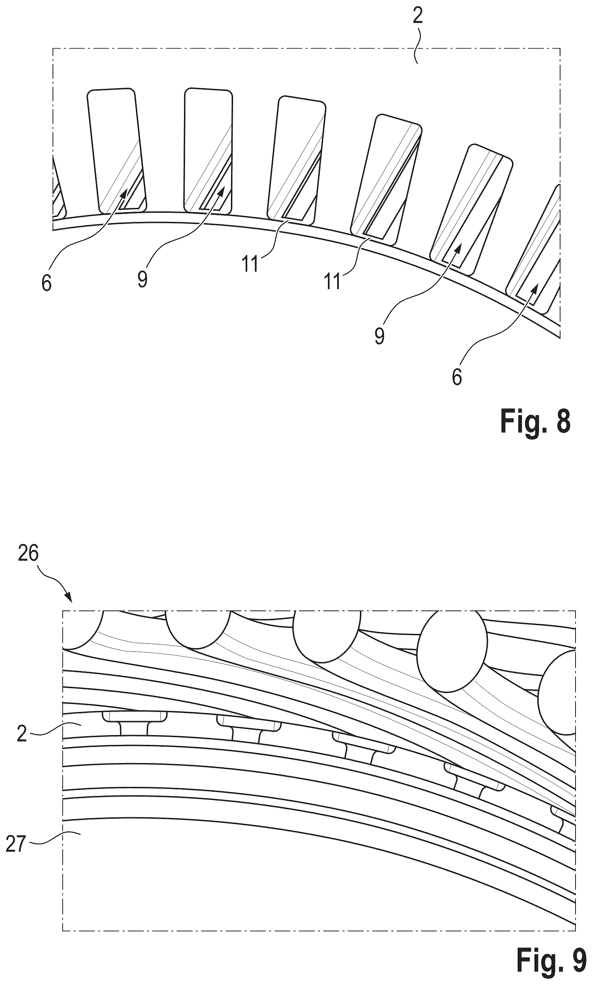

Die Figur 1 zeigt einen Ausschnitt eines Stators 1 einer in der Figur 9 gezeigten elektrischen Maschine 26 nach einer Ausführungsform der vorliegenden Erfindung. Der Stator weist hierbei das Statorpaket 2 aus einer Vielzahl axial aneinandergereihter Statorlamellen 3 auf.

In dem Statorpaket 2 sind zudem über axial miteinander fluchtende Ausnehmungen 4 in den Statorlamellen 3 das Statorpaket 2 axial wenigstens abschnittsweise durchlaufende und/oder durchbrechende Aufnahmen 6 ausgeformt, welche in die Umfangsrichtung 5 des Stators 1 zueinander, insbesondere gleichmäßig beabstandet sind. In einer jeweiligen Aufnahme 6 sind dabei jeweils mehrere Wicklungsdrähte 7 der Statorwicklung 8 des Stators 1 aufgenommen und/oder eingebracht.

Die im Statorpaket 2 ausgeformten Aufnahmen 6 weisen darüber hinaus jeweils den axial verlaufenden Nutabschnitt 9 mit der Nutöffnung 10 sowie die zwei Halteabschnitte 11 auf. Hierbei durchbricht die Nutöffnung 10, den Nutabschnitt 9 öffnend, das Statorpaket 2 radial nach innen. Über die beiden Halteabschnitte 11 ist zudem die in einer jeweiligen Aufnahme 6 angeordnete und z. B. als Nutisolationspapier ausgebildete Isolationseinlage 12 radial in der Aufnahme 6 fixiert. Dies ist dabei dadurch realisiert, dass ein jeweiliger Halteabschnitt 11 der Aufnahmen 6 radial innen, d. h. also innenumfangsseitig des und/oder am Innenumfang des Statorpakets 2 über den im Statorpaket 2 ausgeformten und sich in Umfangsrichtung 5 erstreckenden Steg 13 geschlossen ausgeformt ist.

Wie in der Figur 1 und nochmals sehr schematisch in der Figur 2 aufgezeigt, ist in der Ausführungsform des Stators 1 und/oder des Statorpakets 2 dieser Figuren an einem jeweiligen axialen Ende 18 des Statorpakets 2 ein Halteabschnitt 11 ausgeführt, womit insgesamt zwei Halteabschnitte 11 ausgestaltet sind.

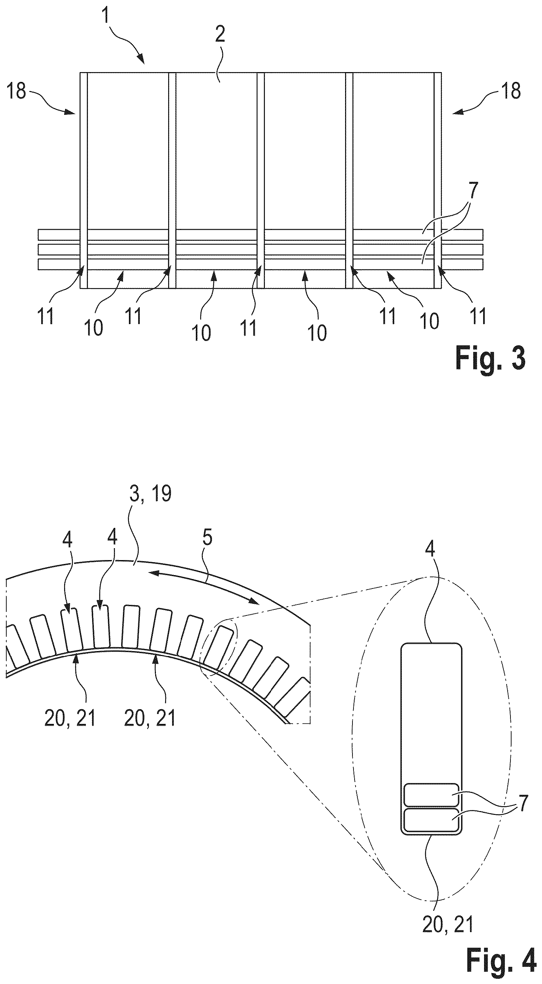

In einer weiteren, in der Figur 3 aufgezeigten Ausführungsform des Stators 1 und/oder des Statorpakets 2 sind hingegen sowohl an den jeweiligen axialen Enden 18 des Statorpakets 2 als auch abseits der axialen Enden 18 des Statorpakets 2, hierbei axial entlang des Statorpakets 2 weitere, insbesondere drei Halteabschnitte 11 ausgebildet. Insgesamt sind somit fünf Halteabschnitte 11 ausgeführt, welche axial zueinander gleichmäßig beabstandet sind.

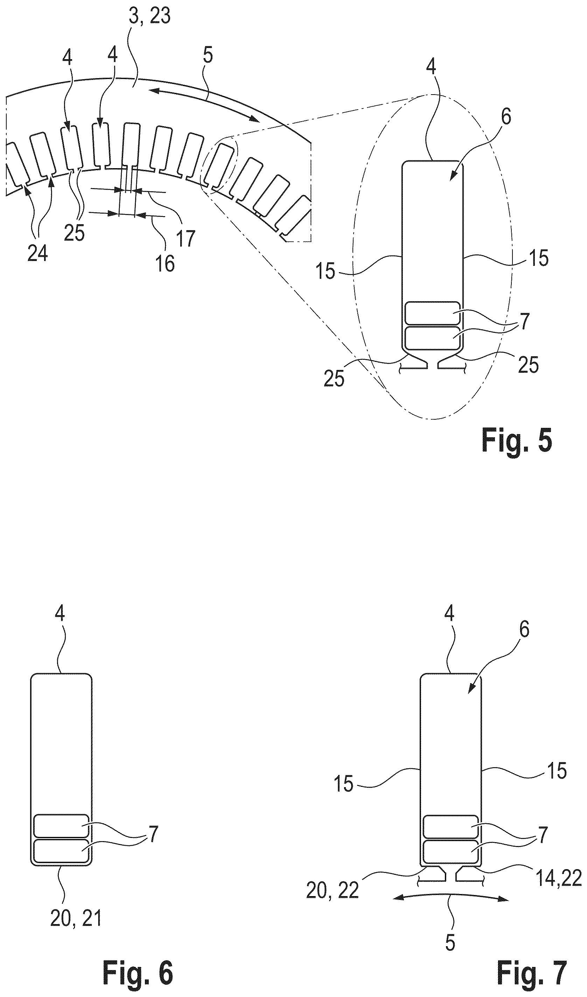

Die detaillierte Ausgestaltung der in den Figuren 1 bis 3 aufgezeigten Halteabschnitte 11 sowie der Nutabschnitte 9 ist in den Figuren 4 und 5 dargestellt, wobei diese jeweils eine Darstellung einer Statorlamelle 3 des jeweiligen Halteabschnitts 11 oder Nutabschnitts 9 sowie eine Detaildarstellung einer Ausnehmung 4 der Statorlamelle 3 mit Wicklungsdrähten 7 aufzeigen.

Der Figur 4 ist hierbei im Speziellen zu entnehmen, dass die in den Figuren 1 bis 3 aufgezeigten Halteabschnitte 11 der Aufnahmen 6 des Statorpakets 2 über eine als Haltelamelle 19 ausgeführte Statorlamelle 3 ausgebildet sind. Dabei ist an den Ausnehmungen 4 der Haltelamelle 19, welche die Halteabschnitte 11 ausformen, radial innen, d. h. also innenumfangsseitig des und/oder am Innenumfang der Haltelamelle 19 jeweils ein sich in und/oder entlang der Umfangsrichtung 5 erstreckendes Haltmittel 20 ausgeformt. Das jeweilige Haltmittel 20 ist hierbei das Stegelement 21, welches die jeweilige Ausnehmung 4 der Haltelamelle 19 vollständig verschließt. Da in den Ausführungsformen der Figuren 1 bis 3 ein Halteabschnitt 11 durch eine Haltelamelle 19 ausgebildet ist, bildet eine jeweilige Haltelamelle 19 für sich genommen auch einen z. B. in der Figur 1 aufgezeigten Steg 13 eines Halteabschnitts 11 aus.

Aus der Figur 5 geht außerdem die spezielle Gestaltung der in den Figuren 1 bis 3 gezeigten Nutabschnitte 9 der Aufnahmen 6 des Statorpakets 2 hervor. Jeder Nutabschnitt 9 wird dabei durch mehrere Statorlamellen 3 gebildet, die als Nutlamellen 23 ausgeführt sind. Eine dieser Nutlamellen 23 ist exemplarisch in der Figur 5 dargestellt. Die Ausnehmungen 4, welche zumindest anteilig einen Nutabschnitt 9 einer Aufnahme 6 ausformen, weisen hierbei radial innen, d. h. also innenumfangsseitig des und/oder am Innenumfang der Nutlamelle 23 die Öffnung 24 auf, welche ein axiales Segment einer z. B. in der Figur 1 dargestellten Nutöffnung 10 ausbildet. Die Nutöffnungsbreite 16 einer Nutöffnung 10 eines Nutabschnitts 9 und somit der Öffnung 24 ist in dieser Ausführungsform geringer als die Nutbreite 17 dieses Nutabschnitts 9. Hierdurch sind an die Öffnung 24 angrenzend, sich in und/oder entlang der Umfangsrichtung 5 erstreckende Nutfüße 25 ausgeformt, wobei diese Nutfüße 25, wie insbesondere der Detaildarstellung der Ausnehmung 4 der Figur 5 zu entnehmen ist, keinen rechten, sondern einen stumpfen Winkel mit den Aufnahmeseitenwänden 15 der Aufnahmen 6 einschließen.

Es können jedoch auch Ausführungsformen des Stators 1 vorgesehen sein, bei welchen die Nutöffnungsbreite 16 der Nutbreite 17 entspricht. In einer solchen Ausführungsform wären hingegen keine Nutfüße 25 ausgeformt.

Aus der Figur 6 geht nochmals die bereits aus der Detaildarstellung der Figur 4 bekannte Ausführungsform einer Ausnehmung 4 eine Haltelamelle 19 hervor. Neben dieser Ausgestaltung, bei der die Ausnehmung 4 der Haltelamelle 19 durch das Stegelement 21 vollständig verschlossen ist, besteht zudem eine hiervon abweichende Ausführungsmöglichkeit einer Ausnehmung 4 einer Haltelamelle 19, welche durch die Figur 7 aufgezeigt wird.

Im Speziellen geht hierbei aus der Figur 7 hervor, dass an der Ausnehmung 4 radial innen, d. h. also innenumfangsseitig des und/oder am Innenumfang einer Haltelamelle 19, das sich in und/oder entlang der Umfangsrichtung 5 erstreckende Haltmittel 20 ausgeformt ist, welches ein Teilstegelement 22 ist, das die Ausnehmung 4 einer Haltelamelle 19 lediglich teilweise verschließt. Ist ein Halteabschnitt 11 wiederum lediglich über eine ein solches Teilstegsegment 22 aufweisende Haltelamelle 19 ausgeführt, bildet das Teilstegsegment 22 auch einen Teilsteg 14 eines Halteabschnitts 11 aus. Dadurch ist auch der Halteabschnitt 11 einer Aufnahme 6 über den sich in Umfangsrichtung 5 erstreckenden Teilsteg 14 lediglich teilweise geschlossen ausgeformt. Hierbei schließt der Teilsteg 14 und somit auch das den Teilsteg 14 ausformende Teilstegsegment 22 mit den sich radial erstreckenden Aufnahmeseitenwänden 15 einen rechten Winkel ein. Dadurch wird ein Verrutschen Wicklungsdrähte 7 sowie der, insbesondere in Figur 1 aufgezeigten Isolationseinlage 12 verhindert.

Den Figuren 8 und 9 sind darüber hinaus weitere Schnittansichten des Statorpakets 2 und/oder des Stators 1 in einer den Stator 1 aufweisenden elektrischen Maschine 26 zu entnehmen, wobei insbesondere in der Figur 8 nochmals mehrere Aufnahmen 4 mit Halteabschnitten 11 und Nutabschnitten 9 aufgezeigt sind. Neben dem Stator 1 weist die insbesondere als Elektromotor ausgeführte elektrische Maschine 26, wie der Figur 9 zu entnehmen ist, zudem den Rotor 27 auf.

### Bezugszeichenliste

- 1: Stator
- 2: Statorpaket
- 3: Statorlamellen
- 4: Ausnehmungen
- 5: Umfangsrichtung

- 6: Aufnahmen
- 7: Wicklungsdraht
- 8: Statorwicklung
- 9: Nutabschnitt
- 10: Nutöffnung

- 11: Halteabschnitt
- 12: Isolationseinlage
- 13: Steg
- 14: Teilsteg
- 15: Aufnahmeseitenwand

- 16: Nutöffnungsbreite
- 17: Nutbreite
- 18: axiales Ende
- 19: Haltelamelle
- 20: Haltmittel

- 21: Stegelement
- 22: Teilstegelement
- 23: Nutlamellen
- 24: Öffnung
- 25: Nutfuß

- 26: elektrische Maschine
- 27: Rotor

## Patentansprüche

1. Stator (1) einer elektrischen Maschine (26) mit einem Statorpaket (2) aus einer Vielzahl axial aneinandergereihter Statorlamellen (3), wobei in dem Statorpaket (2) über axial miteinander fluchtende Ausnehmungen (4) in den Statorlamellen (3) in Umfangsrichtung (5) des Stators (1) zueinander beabstandete, das Statorpaket (2) axial wenigstens abschnittsweise durchlaufende Aufnahmen (6) ausgeformt sind und in einer jeweiligen Aufnahme (6) jeweils wenigstens ein Wicklungsdraht (7) einer Statorwicklung (8) des Stators (1) aufgenommen ist, **dadurch gekennzeichnet, dass** die Aufnahmen (6) jeweils zumindest einen axial verlaufenden Nutabschnitt (9) mit einer Nutöffnung (10) aufweisen, wobei die Nutöffnung (10), den Nutabschnitt (9) öffnend, das Statorpaket (2) radial nach innen durchbricht und jeweils zumindest einen Halteabschnitt (11) aufweisen, über welchen eine, in einer jeweiligen Aufnahme (6) angeordnete Isolationseinlage (12) radial in der Aufnahme (6) fixiert ist.

2. Stator (1) nach Anspruch 1, **dadurch gekennzeichnet, dass** ein jeweiliger Halteabschnitt (11) der Aufnahmen (6) radial innen über einen im Statorpaket (2) ausgeformten und sich in Umfangsrichtung (5) erstreckenden Steg (13) geschlossen ausgeformt ist.

3. Stator (1) nach den Ansprüchen 1 oder 2, **dadurch gekennzeichnet, dass** ein jeweiliger Halteabschnitt (11) der Aufnahmen (6) radial innen über einen sich in Umfangsrichtung (5) erstreckenden Teilsteg (14) lediglich teilweise geschlossen ausgeformt ist, wobei zumindest der Teilsteg (14) mit den sich radial erstreckenden Aufnahmeseitenwänden (15) einen rechten Winkel einschließt.

4. Stator (1) nach zumindest einem der vorangehenden Ansprüche, **dadurch gekennzeichnet, dass** eine Nutöffnungsbreite (16) einer Nutöffnung (10) eines Nutabschnitts (9) einer Nutbreite (17) dieses Nutabschnitts (9) entspricht.

5. Stator (1) nach zumindest einem der vorangehenden Ansprüche, **dadurch gekennzeichnet, dass** an einem jeweiligen axialen Ende (18) des Statorpakets (2) ein Halteabschnitt (11) ausgeführt ist.

6. Stator (1) nach zumindest einem der vorangehenden Ansprüche, **dadurch gekennzeichnet, dass** abseits der axialen Enden (18) des Statorpakets (2), axial entlang des Statorpakets (2) wenigstens ein Halteabschnitt (11) ausgebildet ist.

7. Stator (1) nach zumindest einem der vorangehenden Ansprüche, **dadurch gekennzeichnet, dass** ein Halteabschnitt (11) der Aufnahmen (6) des Statorpakets (2) über zumindest eine als Haltelamelle (19) ausgeführte Statorlamelle (3) ausgebildet ist, an deren, einen Halteabschnitt (11) wenigstens abschnittsweise ausformenden, Ausnehmungen (4) radial innen ein sich in und/oder entlang der Umfangsrichtung (5) erstreckendes Haltmittel (20) ausgeformt ist.

8. Stator (1) nach zumindest einem der vorangehenden Ansprüche, **dadurch gekennzeichnet, dass** das Haltmittel (20) ein Stegelement (21) ist, welches eine Aufnahme (6) einer Haltelamelle (19) vollständig verschließt und zumindest ein axiales Segment eines Stegs (13) eines Halteabschnitts (11) ausbildet.

9. Stator (1) nach zumindest einem der vorangehenden Ansprüche, **dadurch gekennzeichnet, dass** das Haltmittel (20) ein Teilstegelement (22) ist, welches eine Aufnahme (6) einer Haltelamelle (19) lediglich teilweise verschließt und zumindest ein axiales Segment eines Teilstegs (14) eines Halteabschnitts (11) ausbildet.

10. Stator (1) nach zumindest einem der vorangehenden Ansprüche, **dadurch gekennzeichnet, dass** ein Nutabschnitt (9) der Aufnahmen (6) des Statorpakets (2) über zumindest zwei, bevorzugt mehrere aneinandergereihte, als Nutlamellen (23) ausgeführte Statorlamellen (3) ausgebildet ist, deren, zumindest anteilig einen Nutabschnitt (9) einer Aufnahme (6) ausformenden, Ausnehmungen (4) radial innen eine Öffnung (24) aufweisen, welche ein axiales Segment einer Nutöffnung (10) ausbildet.
